(19) Europäisches Patentamt
European Patent Office
Office européen des brevets

(11) Veröffentlichungsnummer: **0 000 607**
**A1**

(12) **EUROPÄISCHE PATENTANMELDUNG**

(21) Anmeldenummer: **78200105.1**

(22) Anmeldetag: **17.07.78**

(51) Int. Cl.²: **C 08 G 18/80, C 08 G 18/42**

(30) Priorität: **20.07.77 DE 2732775**

(43) Veröffentlichungstag der Anmeldung:
**07.02.79 Bulletin 79/3**

(84) Benannte Vertragsstaaten:
**BE CH DE FR GB NL SE**

(71) Anmelder: **VEBA-CHEMIE AKTIENGESELLSCHAFT**
**Pawikerstrasse 30**
**D-4660 Gelsenkirchen-Buer. (DE)**

(72) Erfinder: **Schmitt, Felix, Dr.**
**Tiroler Weg 2**
**D-4352 Herten-Langenbochum. (DE)**

(72) Erfinder: **Kriebel, Günter, Dr.**
**Gaussstrasse 15**
**D-4690 Herne 2. (DE)**

(74) Vertreter: **Stell, Johanna et al**
**ZA-Gewerbliche Schutzrechte Postfach 2840**
**Herzogstrasse 28**
**D-4690 Herne 2. (DE)**

(54) Verfahren zur Herstellung duroplastischer, einkomponentiger Polyurethane.

(57) Gegenstand ist ein Verfahren zur Herstellung einkomponentiger Polyurethanlacke für die Metallbandlackierung, wobei einerseits Polyester mit einer OH-Funktionalität $\geq 2$, einer OH-Zahl von 70 - 150 mg KOH/g und einem Molekulargewicht von etwa 800 - 2500, aus o-, m- und/oder p-Benzoltricarbonsäuren bzw. deren Alkylester mit 1 - 4 C-Atomen mit trifunktionellen Alkoholen und/oder Glykolen mit andererseits mittels Dimethylketoxim blockierten cycloaliphatischen Polyisocyanaten im Äquivalentverhältnis von OH-Gruppen zu blockierten Isocyanatgruppen von 1,0 : 0,7 bis 1,0 : 1,1, insbesondere 1,0 - 1,0, umgesetzt werden.

In der Kette können heteroatomfreie Glykole mit 5 - 8 C-Atomen eingesetzt werden.

Ein besonders geeignetes cycloaliphatisches Isocyanat ist monomeres 3-Isocyanatomethyl- 3,5,5- trimethylcyclohexylisocyanat.

Gelsenkirchen-Scholven, den 18.07.1977

VEBA-CHEMIE Aktiengesellschaft
Gelsenkirchen-Buer

---

## Verfahren zur Herstellung duroplastischer,einkomponentiger Polyurethane

---

### Beschreibung und Beispiele:

Polyurethane würden wesentliche Voraussetzungen für den
Einsatz als Beschichtung zur Herstellung von lackierter Metallbandware erfüllen. So zeigen sie ausgezeichnete Oberflächenhärte, Abriebfestigkeit und Chemikalienbeständigkeit. Desweiteren ergeben Polyurethane, hergestellt mittels aliphatischer
oder cycloaliphatischer Polyisocyanate Lackfilme, die sich
zusätzlich durch hervorragende Wetterbeständigkeit auszeichnen.

Polyurethane werden jedoch praktisch nicht auf dem Sektor der
Bandlackierung eingesetzt, da sie bedingt durch den Reaktionsmechanismus eine zweikomponentige Handhabung voraussetzen, die
jedoch bei der Metallbandlackierung zu großen, in vielen
Fällen unüberwindlichen Schwierigkeiten führt. Desweiteren
war es bisher nicht möglich, bei ausreichend guter Oberflächenhärte die guten Verformungswerte zu erreichen, die heute
unschwer mit PVC-Organosolen und PVDF-Systemen erzielbar sind.

- 2 -

Es hat nicht an Anstrengungen gefehlt, speziell für den allgemeinen Lacksektor die vorgegebene Zweikomponentigkeit in eine Pseudo-Einkomponentigkeit zu überführen. Dabei sind im Prinzip die beiden folgenden Wege beschritten worden:

1. Basierend auf Polyäthern und Polyestern stellt man Isocyanatendgruppen aufweisende Harze her. Diese Harze reagieren nach der Applikation mit der Feuchtigkeit der Luft zu vernetzten, hochmolekularen Polyäther- bzw. Polyester-Polyharnstoff. Die zweite Komponente ist also in diesen Fällen Wasser. Aus dieser Tatsache ergeben sich auch die Nachteile dieser vom Prinzip her eleganten Methode. Vor der Applikation muß auf strengen Ausschluß von Wasser geachtet werden. Es dürfen nur wasserfreie Harze, Lösungsmittel und Pigmente usw. zum Einsatz gelangen. Da diese Voraussetzungen nur mit großem technologischen Aufwand geschaffen werden können, ist der Einsatz solcher Produkte bisher nur auf einige Sektoren beschränkt geblieben.

2. Der zweite Weg geht von der allgemeinen Tatsache aus, daß viele organische Bindungen ab einer bestimmten Temperatur wieder zur Rückspaltung neigen. Man hat eine Reihe von Substanzen gefunden, die mit Isocyanatgruppen bei Raumtemperatur stabile Verbindungen eingehen, die bei erhöhter Temperatur in der Regel zwischen 100 und 200°C wieder in Isocyanatgruppen rückspalten. Solche Produkte werden als Isocyanatabspalter oder als blockierte oder maskierte Isocyanate in der Fachliteratur bezeichnet.

In Anwesenheit von Hydroxylgruppen kann bei Raumtemperatur keine Reaktion der Isocyanatgruppe erfolgen, so daß die einkomponentige Verarbeitung möglich wird.

Es ist auch nach Weg 2 Stand der Technik, daß 2-Butanonoximblockierte Isocyanate als Vernetzer für Hydroxylacrylate eingesetzt werden (vgl. US-Patent 3,694,389). Der Nachteil von
Hydroxylacrylaten im Einsatz als Polyolkomponente für Polyurethanbandbeschichtungslacke liegt in der schlechten Verformbarkeit. Gute Verformbarkeit ist jedoch eine unumgängliche
Voraussetzung für die Eignung von Beschichtungen auf dem
Sektor der Metallbandlackierung. Weitere, allgemein geeignete
Polyole sind Polyäther und höhermolekulare Epoxide. Diese
beiden Gruppen von Produkten sind jedoch aufgrund der schlechten
Bewitterungseigensd haften nicht für die Kombination mit
aliphatischen und cycloaliphatischen Isocyanaten zu empfehlen.

Aus der DT-OS 23 46 818 sind auch bekannt Kombinationen von
OH-Gruppen-haltigen Polyestern mit $\epsilon$-Caprolactam-blockierten
Polyisocyanaten. Wegen der hohen erforderlichen Objekttemperatur
von ca. 240°C sind solche Lacke nur mit sehr thermostabilen
Pigmenten zu pigmentieren. Pigmente hoher Thermostabilität
sind jedoch in vielen Fällen aus toxikologischen Gründen wegen
der Schwermetallbasis nicht unbedenklich. Gelingt es, die
erforderliche Objekttemperatur unter 220°C zu senken,
stehen eine Fülle von Pigmenten zur Verfügung, von denen keine
gesundheitsschädigenden Auswirkungen zu befürchten sind.

Überraschenderweise konnten Polyurethan-Rohstoffe aufgefunden
werden, die aus Kombination mit blockierten, cycloaliphatischen
Polyisocyanaten mit speziellen hydroxylgruppenhaltigen Polyestern entstehen und alle wesentlichen Voraussetzungen für
den Einsatz bei der Metallbandlackierung erfüllen. Besonders
hervorzuheben sind extrem gute Verformbarkeit bei guter Oberflächenhärte und sehr guten Bewitterungseigenschaften. Die
gute Verformbarkeit bleibt auch dann noch erhalten, wenn solche
Lacke durch Zusatz von phyrolytisch gewonnener Kieselsäure auf
halbglänzende oder matte Oberflächen eingestellt werden.

Gegenstand der Erfindung ist daher ein Verfahren zur Herstellung einkomponentiger Polyurethanlacke für die Metallbandlackierung, dadurch gekennzeichnet, daß einerseits Polyester mit einer OH-Funktionalität von mindestens 2, einer OH-Zahl von 70 - 150 mg KOH/g und einem Molekulargewicht von etwa 800 - 2500, aus o-, m- und/oder p-Benzoldicarbonsäuren und/oder 1,2,5- bzw. 1,3,5-Benzoltricarbonsäuren bzw. deren Alkylester mit 1 - 4 C-Atomen mit trifunktionellen Alkoholen und/oder Glykolen mit andererseits mittels Dimethylketoxim blockierten cycloaliphatischen Polyisocyanaten im Äquivalentverhältnis von OH-Gruppen zu blockierten Isocyanatgruppen von 1,0 : 0,7 bis 1,0 : 1,1, insbesondere 1,0 : 1,0, umgesetzt werden.

Als dreiwertige Alkohole für die Herstellung von Polyestern sind insbesondere Trimethylolpropan, Trimethyloläthan und Triäthanolpropan geeignet. Von der Glykolseite sind besonders solche geeignet, deren Kette heteroatomfrei ist und aus 5 - 8, insbesondere 5 - 6 C-Atomen besteht, z.B. 1,5-Pentandiol, 1,6-Hexandiol, 2,2,4- bzw. 2,4,4-Trimethylhexandiol und 3-Methylpentandiol.

Die OH-Zahl der Polyester mit einer OH-Funktionalität von mindestens 2, liegt im Bereich von 70 - 150, insbesondere 100 mg KOH/g. Die Molekulargewichte liegen um 800 - 2500.

Geeignete Polyisocyanate sind insbesondere 2,4- und/oder 2,6-Hexahydrotoluylendiisocyanat, o-, m- und p-Xylylendiisocyanat, 3-Isocyanatomethyl-3,5,5-trimethylcyclohexylisocyanat (IPDI) sowie 4,4'-Dicyclohexylmethandiisocyanat.

Ferner sind folgende Polyisocyanat-Addukte geeignet: Polyisocyanate, die auf Basis der obengenannten oder Gemische der obengenannten Diisocyanate beruhen und durch eine Additionsreaktion mit OH-Gruppen-haltigen Produkten mit einer Mindestfunktionalität von 2 entstehen, wobei das Äquivalentverhältnis von OH : NCO größer als 1 : 1,2, bevorzugt 1 : 1,5
bis 1 : 2, eingestellt wird; Polyisocyanate, die durch Reaktion
der obengenannten Diisocyanate mit Wasser unter Ausbildung
von Harnstoff und/oder Biuretstrukturen entstehen; Polyisocyanate,
die durch Oligomerisierung der obengenannten Diisocyanate
zu Dimeren, Trimeren oder Pentameren gewonnen werden.

Selbstverständlich können auch Gemisch der verschiedenen Polyisocyanate eingesetzt werden.

Als Lösungsmittel zur Formulierung der erfindungsgemäßen
Polyurethane sind geeignet: Ketone, wie Methylisobutylketon,
Cyclopentanon, Cyclohexanon, Isophoron, Trimethylcyclohexanon
u.a.; Aromaten, wie Benzol, Toluol, Chlorbenzol, Aromatengemische von $C_8$ bis $C_{11}$ u.a.; cyclische Äther, wie Tetrahydrofuran, Dioxan u.a.; Ester, wie n-Butylacetat, Isopropylacetat,
Cyclohexylacetat, Äthylglykolacetat, Methylglykolacetat, Butylglykolacetat.

Zu den bereits obengenannten Vorteilen des erfindungsgemäßen
Verfahrens tritt, kombiniert mit der Reduzierung der notwendigen
Objekttemperatur, eine Energieersparnis sowie ein erhöhter
Umweltschutzeffekt auf. Ganz besonders vorteilhaft wirkt sich
die nun mögliche Erhöhung der Bandgeschwindigkeit bei gleichem
Energieaufwand aus.

Als Maß für den Begriff der extremen Verformbarkeit kann insbesondere der T-Bend-Test (Prüfnormen der European Coil Coating
Association), gemessen an 0,8 mm starken, lackierten Eisenblechen, herangezogen werden. Hierbei wird das Blech mit der
Lackseite nach außen in verschiedenen Krümmungsradien um 180°C gebogen, wobei sich die Krümmungsradien dadurch ergeben, daß man entweder keine (Maßzahl 0) oder mehrere (Maßzahl $>$0) unlackierte Bleche gleicher Stärke als Abstandhalter bei der Biegung verwendet. Die Maßzahl gibt an, unter welchen Bedingungen die Biegung eben noch erfolgen kann, ohne daß bei 10facher Vergrößerung Risse erkennbar sind.

Als Maß für die Widerstandskraft der Lacke gegenüber mechanischer Beschädigung (Oberflächenhärte) kann insbesondere die Bleistifthärte nach der Prüfnorm der European Coil Coating Association und die Pendelhärte nach DIN 53 157 herangezogen werden. Anhaltspunkte und Aussagen über Außenbewitterungseigenschaften können durch geeignete Kurzbewitterungen, z.B. im Waetherometer, ermittelt werden.

Beispiel 1

A. Herstellung eines hydroxylgruppenhaltigen Polyesters

In einer geeigneten Glas-Veresterungsapparatur wurden
10 Mol (1940 g) Terephthalsäuredimethylester mit 8 Mol
(1280 g) 2,2,4- bzw. 2,4,4-Trimethylhexandiol-1,6-Isomerengemisch (ca. 40 : 60) sowie 3 Mol (402 g) 1,1,1-Trimethylolpropan der Umesterung unterworfen. Die Umesterung wurde
mit 0,1 Gew.-% Dibutylzinnoxid katalysiert. Die Reaktionskomponenten wurden langsam unter Rühren erwärmt, bis etwa
bei einer Temperatur von 140°C eine homogene Schmelze entstand. Daraufhin wurde die Temperatur weiter auf ca. 185°C
erhöht, bei dieser Temperatur kam es zur ersten Methanolabspaltung. Im Laufe von etwa 10 Stunden wurde die Umesterungstemperatur auf max. 220°C erhöht, wobei praktisch in der
letzten Stunde bei 220°C kein Methanol mehr anfiel. Während
der gesamten Umesterung perlte ein schwacher Strom von
Stickstoff durch das Reaktionsmedium, um das Kondensationsprodukt Methanol besser austragen zu können. Zur Abtrennung
von flüchtigen Anteilen wurde die Temperatur nach der Umesterung auf 200°C gesenkt und während 30 min. bei einem
Vakuum von 1 - 3 mm Hg flüchtige Anteile aus der Polyesterschmelze entfernt.

Chemische und physikalische Kennzahlen des Polyesters:

| | |
|---|---|
| OH-Zahl | 93 mg KOH/g |
| Säurezahl | ˂1 mg KOH/g |
| Molekulargewicht | 1650 |
| Glasumwandlungstemperatur | -5°C bis +8°C |

Der Polyester wurde entsprechend seiner späteren Verwendung als Harzkomponente zur Formulierung eines Polyurethanlackes für die Bandbeschichtung in Äthylglykolacetat/Solvesso 150 ( 1 : 2) zu einer 60 %igen Lösung aufgenommen. (Solvesso 150 stellt ein Aromatengemisch dar, mit den Siedegrenzen 177 - 206°C)

B. Herstellung der mit Dimethylketoxim-blockierten Isocyanatkomponente

500 g eines Gemisches, bestehend aus 15 Gew.% Trimeren (Isocyanurat) und ca. 85 % eines Dimeren (Uretdion) des Isophorondiisocyanates wurden in 440 g Gemisch, bestehend aus Äthylglykolacetat/Solvesso 150 (1 : 2) gelöst und anschließend mit 159 g Dimethylketoxim portionsweise unter Rühren umgesetzt. Das Gemisch der Oligomeren des Isophorondiisocyanates wurde in an sich bekannter Weise unter dem katalytischen Einfluß von Tributylphosphin hergestellt und einer Dünnschichtaufarbeitung unterworfen, um monomeres Isophorondiisocyanat abzutrennen. Der Gehalt an monomerem Isocyanat nach der Dünnschichtaufarbeitung lag unter 1 Gew.-%, der NCO-Gehalt des Oligomerengemisches wurde mit 18,4 ermittelt. Bei der Blockierung der freien NCO-Gruppen des Oligomerengemisches erwärmte sich die Reaktionsmischung auf ca. 55°C.

C. Lackformulierung

Basierend auf den unter A und B beschriebenen Harzen wurde ein Polyurethanlack für die Bandlackierung nach der folgenden Rezeptur formuliert:

    49,2 % Polyesterlösung, siehe unter A

    13,4 % blockiertes Isocyanataddukt, siehe unter B

    32,3 % Weißpigment, Titandioxid (PVK 19)

     3,9 % Butylglykolacetat

     1,2 % Verlaufmittel (Siliconbasis)

<u>D.</u>   Lacktechnische Abprüfung

0,8 mm starke Aluminiumbleche wurden mit einem unter C beschriebenen Weißlack beschichtet und in einem Umluftwärmeschrank bei 310°C Umlufttemperatur 55 sek. lang gehärtet. Die maximale Objekttemperatur betrug 220°C.

<u>Prüfergebnisse</u>

| | | |
|---|---|---|
| Schichtstärke | : | 25 µm |
| Härte nach König (DIN 53 157) | : | 173 |
| Härte nach Buchholz (DIN 53 153) | : | 100 |
| Bleistifthärte | : | 2 H |
| Tiefung nach Erichsen (DIN 53 156) | : | ⟩7 mm |
| Gitterschnitt (DIN 53 151) | : | 0 |
| T-Bend (ECCA) | : | 0 |

<u>Beispiele 2 - 4</u>

Analog zu Beispiel 1 und unter Einsatz der dort beschriebenen Polyesterlösung 1A wurden Einbrennlacke formuliert. Dabei gelangten verschiedene acetonblockierte Polyisocyanate zum Einsatz.

<u>B.</u>   Herstellung blockierter Polyisocyanate

<u>Beispiel 2</u>

231,6 g 4.4'-Dicyclohexylmethandiisocyanat wurden in 160 g Xylol und 80 g Äthylglykolacetat gelöst und anteilig im Temperaturbereich 20°C bis 67°C mit der stöchiometrischen Menge Dimethylketoxim .(128,4 g) umgesetzt. Nachdem die gesamte Menge des Blockierungsmittels mit den Isocyanatgruppen umgesetzt war, lag der Gehalt an freien Isocyanatgruppen bei 0,25 % NCO. Der latente NCO-Gehalt der so hergestellten Lösung betrug 12,3 % NCO.

Beispiel_3 (Vergleichsbeispiel)

354 g des Isomerengemisches aus 2,2,4- und 2,4,4-Trimethylhexamethylendiisocyanat wurden auf ca. 60°C erwärmt und portionsweise mit geschmolzenem Dimethylketoxim unter Rühren umgesetzt. Die Zugabe von Acetonoxim (246 g) wurde dergestalt durchgeführt, daß die Reaktionstemperatur 80°C nicht überstieg. Nachdem die Reaktion praktisch vollständig abgelaufen war, wurde bei ca. 70°C das blockierte Polyisocyanat mit 133 g n-Butylacetat und 267 g Xylol aufgenommen. Der Gehalt an freien Isocyanatgruppen der Lösung betrug 0,15 % NCO; der Gehalt an blockierten NCO-Gruppen 14,1 %.

Beispiel_4 (Vergleichsbeispiel)

464 g einer 75 %igen Lösung eines auf Basis von Hexamethylen- diisocyanat basierenden, Biuretgruppen-enthaltendes Poly- isocyanates in Äthylglykolacetat/Xylol (1 : 1) wurde mit 136 g Xylol und 68 g Äthylglykolacetat verdünnt und beginnend bei Raumtemperatur mit 132 g Acetonoxim portionsweise zur Reaktion gebracht.

Die Lösung dieses blockierten Polyisocyanates ist mit einem Gehalt an freien NCO-Gruppen von 0,4 % und durch einen Gehalt an latenten Isocyanatgruppen von 9,6 % zu charakterisieren.

C. Lackformulierung

Analog zu Beispiel 1 wurden Einbrennlacke formuliert, appliziert und ausgeprüft. Als Polyolkomponente diente die in Beispiel 1 beschriebene Polyesterlösung.

Tabelle 1: — Rezepturen der Beispiele 2 bis 4 —

|  | Beispiel | | |
|---|---|---|---|
|  | 2 | 3 | 4 |
| Polyesterlösung Beispiel 1A | 51,2 | 54,0 | 44,9 |
| Solvesso 150 | 4,7 | 4,7 | 6,5 |
| Äthylglykolacetat | 2,3 | 2,3 | 3,2 |
| Weißpigment $TiO_2$ (Rutil) | 22,8 | 21,4 | 24,2 |
| Verlaufmittel | 1,2 | 1,2 | 1,2 |
| Block.Isocyanat - Beispiel 2 | 17,8 | - | - |
| Block.Isocyanat - Vergl.Beispiel 3 | - | 16,4 | - |
| Block.Isocyanat - Vergl.Beispiel 4 | - | - | 20,0 |

D. Lacktechnische Abprüfungen

Die Tabelle 2 stellt die verschiedenen Härtungsbedingungen sowie die lacktechnischen Prüfdaten der gehärteten Lackfilme dar.

Tabelle 2: — Lacktechnische Daten der in den Beispielen 2 bis 4 beschriebenen Einbrennlackierungen —

| Härtungs-bedingungen | Lacktechnische Prüfdaten | | | | | | | | | |
|---|---|---|---|---|---|---|---|---|---|---|
|  | SD | HK | HB | $G_{20}$ | $G_{45}$ | $G_{60}$ | ET | GS | T-Bend | Blei-stift-härte |
| Beispiel 2 310°C, 55 sec | 23 | 165 | 91 | 83 | 55 | 87 | 7,9 | 0 | 0-1 | H |
| Vgl.Beisp. 3 300°C, 50 sec | 25 | 120 | 91 | 91 | 64 | 95 | 8,8 | 0 | 0 | HB |
| Vgl.Beisp. 4 300°C, 50 sec | 30 | 142 | 100 | 73 | 54 | 89 | 8,6 | 0 | 2 | H |

Die Vergleichsbeispiele 3 und 4 zeigen auf, daß der Einsatz
von aliphatischen Polyisocyanaten zwar prinzipiell möglich
ist, daß aber die Kombination von guter Oberflächenhärte
mit hoher Flexibilität nicht einstellbar ist.

## Beispiel 5

**A.** Herstellung eines hydroxylgruppenhaltigen Polyesters

7 Mol Isophthalsäure (1163 g), 4 Mol Hexandiol-1,6 (472 g),
2 Mol 3-Methylpentandiol-1,5 (236 g) und 2 Mol 1,1,1-Trimethylolpropan (268 g) wurden in einem 4 l Glaskolben unter
Zusatz von 0,1 Gew.% Dibutylzinnoxid der Veresterung unterworfen. Mit steigender Temperatur entstand eine homogene
Schmelze und bei ca. 195°C kam es zur ersten Wasserabscheidung
Innerhalb von 8 Stunden wurde die Temperatur auf max. 220°C
erhöht und bei dieser Temperatur während 6 weiterer Stunden
die Veresterung zuende geführt. Anschließend wurde die
Polyesterschmelze auf ca. 200°C abgekühlt und bei einem
Vakuum von 20 - 30 mm HG zur Entfernung der flüchtigen Anteile während 30 - 45 Minuten evakuiert. Der hell-gelbe,
transparente Polyester ist analytisch mit einer OH-Zahl von
103 mg KOH/g und mit einer Säurezahl von 1 mg KOH/g zu
beschreiben. Eine Molekulargewichtsbestimmung ergab ein
mittleres Molekulargewicht von 2500. Dieser Polyester wurde
in einem Lösungsmittelgemisch von Äthylglykolacetat und
Solvesso 150 (1 : 2) zu einer 60 %igen Lösung aufgenommen
(Solvesso 150 stellt ein Aromatengemisch mit den Siedegrenzen
von 177 - 206°C dar).

**B.** Herstellung eines Dimethylketoxim-blockierten Polyisocyanats

Analog zu den in den Beispielen 1 bis 4 beschriebenen
blockierten Isocyanataddukten wurden 222,1 g Isophorondiisocyanat in 80 g Äthylglykolacetat und 151 g Solvesso 150 gelöst (Solvesso 150 stelle ein Aromatengemisch dar,mit den
Siedegrenzen 177 - 206°C). In diese Lösung wurden 124,3 g
Dimethylketoxim in fester Form eingebracht. Bedingt durch
die exotherme Reaktion erwärmte sich die Reaktionsmischung
bis auf max. 55°C. Nach beendeter Reaktion betrug der
NCO-Gehalt der Lösung 2,35 %. Der latente NCO-Gehalt dieser
Lösung eines blockierten Polyisocyanates betrug 14,5 %.

**C.** Herstellung der Harzlösung und des formulierten Lackes

1295 g der unter A. beschriebenen Lösung des Polyesters
wurden mit 400 g des unter B. beschriebenen blockierten Polyisocyanates in einem Glaskolben gemischt und während
60 Minuten bei 80°C zur Reaktion gebracht. Nach der folgenden
Rezeptur wurde eine Einbrennlackierung formuliert und auf
1 mm Aluminiumblechen zur Aushärtung gebracht.

> 60,4 Gew.% Harzlösung (siehe oben)
> 28,5 Gew.% Weißpigment $TiO_2$ (Rutil)
> 3,3 Gew.% Äthylglykolacetat
> 6,7 Gew.% Solvesso 150
> 1,1 Gew.% Verlaufmittel (Basis: Silikone und
> hochsiedende Ester)

**D.** Lacktechnische Abprüfung

Die Tabelle 3 faßt die verschiedenen Härtungsbedingungen
sowie die lacktechnischen Prüfdaten zusammen.

Tabelle 3: - Härtungsbedingungen und Prüfdaten des in Beispiel 5 beschriebenen Lackes -

| Härtungs-bedingung | SD | HK | HB | $G_{20}$ | $G_{45}$ | $G_{60}$ | ET | GS | T-Bend | Blei-stift-härte |
|---|---|---|---|---|---|---|---|---|---|---|
| 300°C, 45 sec | 20 | 120 | 77 | 90 | 57 | 91 | 9,1 | 0 | 0 | HB |
| 300°C, 50 sec | 20 | 143 | 100 | 82 | 53 | 92 | 9,4 | 0 | 0 | H-2H |
| 300°C, 60 sec | 23 | 137 | 100 | 82 | 55 | 90 | 9,3 | 0 | 0 | H-2H |

Zu Beispiel 2 bis 5

Erklärung der in den Tabellen 1 - 3 benutzten Abkürzungen

SD = Schichtstärke in μm

HK = Härte nach König  DIN 53 157

HB = Härte nach Buchholz  DIN 53 153

G = Glanzwerte nach Gardner

ET = Tiefung nach Erichsen  DIN 53 156

GS = Gitterschnitt  DIN 53 151

Beispiel 6

A. Herstellung eines hydroxylgruppenhaltigen Polyesters

In einer geeigneten Apparatur wurden 10 Mol Phthalsäureanhydrid (1480 g) und 12,5 Mol Hexandiol-1,6 (1475 g) der Veresterung unterworfen. Nachdem etwa bei einer Temperatur von 155°C eine homogene Schmelze entstanden war, wurden 3 g Dibutylzinnoxid als Veresterungskatalysator zugegeben.

Innerhalb von 6 Stunden wurde kontinuierlich die Temperatur auf 220°C erhöht und anschließend noch 2 1/2 Stunden im Temperaturbereich 220 - 232°C verestert. Anschließend wurde die Schmelze des Polyesters auf 190°C abgekühlt und während 45 Minuten bei einem Vakuum von 5 Torr flüchtige Anteile entfernt. Die Analyse des so hergestellten Polyesters ergab eine OH-Zahl von 79 mg KOH/g und eine Säure-Zahl von 1,5 mg KOH/g. Dieser Polyester wurde zu einer 60 %igen Lösung in Äthylglykolacetat/Solvesso 150 (1 : 2) aufgenommen.

B. Blockiertes Polyisocyanat

466 g des in bekannter Weise hergestellten Trimeren des 3-Isocyanatomethyl-3,5,5-trimethylcyclohexylisocyanates wurden in 272 g Solvesso 150 und 136 g Äthylglykolacetat gelöst und mit 146 g Dimethylketoxim umgesetzt. Dabei stieg die Temperatur der Reaktionsmischung von Raumtemperatur auf max. 73°C. Nachdem die Lösung wieder Raumtemperatur angenommen hatte, betrug der Gehalt an freiem Isocyanat noch 0,5 Gew.%. Diese Lösung geht in die Berechnung der stöchiometrischen Lackansätze mit einem latenten NCO-Gehalt von 8,4 % ein.

C. Lackformulierung

Mit den unter A und B beschriebenen Harzen wurde ein Polyurethan-Weißlack formuliert, wobei die Pigmentierung in einer Perlmühle erfolgte.

Rezeptur der Lackformulierung:

    43,7 % Polyesterlösung, siehe unter A
    18,5 % blockiertes Polyisocyanat, siehe unter B
    29,6 % Weißpigment $TiO_2$ (PVK 19)
     7,0 % Äthylglykolacetat/Solvesso 150  (1 : 2)
     1,2 % Verlaufmittel  (Silikonharze, gelöst in
                          hochsiedenden Estern)

Dieser Weißlack wurde im Verhältnis 20 : 80 mit dem Weißlack des Beispiels 5 (Einsatz monomeres Diisocyanat) abgemischt und in der üblichen Weise auf 1 mm starken Aluminiumblechen appliziert und der Härtung bei 310°C Umlufttemperatur unterworfen. Der Lack wurde 50 sec. in dem Umluftwärmeschrank gehärtet, dabei stellte sich die maximale Objekttemperatur auf 210°C ein.

D. Lacktechnische Abprüfungen

Prüfergebnisse

| | |
|---|---|
| Schichtdicke | 23 µm |
| Härte nach König (DIN 53 157) | 162 |
| Härte nach Buchholz (DIN 53 153) | 100 |
| Bleistifthärte | H - 2H |
| Erichsentiefung (DIN 53 156) | >7 mm |
| Gitterschnitt (DIN 53 151) | 0 |
| T-Bend (ECCA) | 0 |

Beispiel 7 (Vergleichsbeispiel)

A. Herstellung eines hydroxylgruppenhaltigen Polyesters

7 Mol Isophthalsäure (1163 g), 6 Mol 3,3-Dimethylpentandiol-1,5 (624 g) und 2 Mol 1,1,1-Trimethylolpropan (268 g) wurden in einem 4 l Glaskolben unter Zusatz von 0,1 Gew.% n-Dibutylzinnoxid der Veresterung unterworfen. Mit steigender Temperatur entstand eine homogene Schmelze und bei ca. 195°C kam es zur ersten Wasserabscheidung. Innerhalb von 8 Stunden wurde die Temperatur auf 220°C erhöht und bei dieser Temperatur während 6 weiteren Stunden die Veresterung zuende geführt. Die Säurezahl war zu diesem Zeitpunkt 1,7 mg KOH/g.
In der üblichen Weise wurde die Polyesterschmelze bei
ca. 200°C einer Vakuumbehandlung von 10 Torr ausgesetzt
und während 30 Minuten von flüchtigen Anteilen befreit.
Während der gesamten Reaktion wurde ein schwacher Stickstoffstrom durch das Reaktionssystem geleitet. Als analytische
Daten wurden 105 mg KOH/g als OH-Zahl und eine Säurezahl
von 1,7 mg KOH/g ermittelt. Der Polyester wurde gemäß seiner
späteren Verwendung in Äthylglykolacetat/Solvesso 150 zu
einer 60 %igen Lösung aufgenommen.

B. Blockiertes Polyisocyanat

Bei diesem Beispiel wurde das unter B in Beispiel 1 beschriebene blockierte Oligomerengemisch des Isophorondiisocyanates eingesetzt. Auch hier ist das Blockierungsmittel
Dimethylketoxim, und es kommt eine 60 %ige Lösung dieses
Materials in Äthylglykolacetat/Solvesso 150 (1 : 2) zur
Anwendung.

C. Lackformulierung

Mit den unter A und B beschriebenen Harzen wurde ein Polyurethanlack formuliert. Die Pigmentierung wurde in einer
Sandmühle vorgenommen.

Rezeptur der Lackformulierung:

49,0 % Polyesterlösung, siehe unter A
14,7 % blockiertes Isocyanataddukt, siehe unter B
32,0 % Weißpigment $TiO_2$ (PVK 19)
 3,2 % Butylglykolacetat
 1,1 % Verlaufmittel (lackverträgliche Siliconharze
                      in hochsiedenden Esterlösungsmitteln)

0000607

D. Lacktechnische Abprüfung

In der üblichen Weise wurden 0,8 mm starke Aluminiumbleche mit dem unter C beschriebenen Weißlack beschichtet und bei 310°C Umlufttemperatur 55 sec. gehärtet.

Prüfergebnisse

| | |
|---|---|
| Schichtstärke | 23 µm |
| Härte nach König (DIN 53 157) | 185 |
| Härte nach Buchholz (DIN 53 153) | 111 |
| Bleistifthärte | 3H |
| Tiefung nach Erichsen (DIN 53 156) | 3 mm |
| Gitterschnitt (DIN 53 151) | 0 |
| T-Bend (ECCA) | >5 |

An diesem Beispiel soll aufgezeigt werden, daß beim Einsatz von nicht erfindungsgemäßen Glykolen bei der Polyester-Herstellung keine ausreichende Flexibilität zu erzielen ist.

st.-wi

0000607

Gelsenkirchen-Scholven, den 18.07.1977

VEBA-CHEMIE Aktiengesellschaft
Gelsenkirchen-Buer

---

## Verfahren zur Herstellung duroplastischer, einkomponentiger Polyurethane

---

## Patentansprüche:

1. Verfahren zur Herstellung einkomponentiger Polyurethanlacke für die Metallbandlackierung, d a d u r c h
   g e k e n n z e i c h n e t , daß einerseits Polyester
   mit einer OH-Funktionalität von mindestens 2, einer
   OH-Zahl von 70 - 150 mg KOH/g und einem Molekulargewicht
   von etwa 800 - 2500, aus o-, m- und/oder p-Benzoldicarbonsäuren und/oder 1,2,5- bzw. 1,3,5-Benzoltricarbonsäuren bzw. deren Alkylester mit 1 - 4 C-Atomen mit
   trifunktionellen Alkoholen und/oder Glykolen mit andererseits mittels Dimethylketoxim blockierten cycloaliphatischen
   Polyisocyanaten im Äquivalentverhältnis von OH-Gruppen
   zu blockierten Isocyanatgruppen von 1,0 : 0,7 bis 1,0 : 1,1,
   insbesondere 1,0 : 1,0, umgesetzt werden.

2. Verfahren nach Anspruch 1, d a d u r c h g e k e n n -
   z e i c h n e t , daß in der Kette heteroatomfreie
   Glykole mit 5 - 8, insbesondere 5 - 6 C-Atomen, eingesetzt
   werden.

C000607

3. Verfahren nach Anspruch 1, d a d u r c h  g e k e n n -
   z e i c h n e t ,  daß als cycloaliphatisches Isocyanat
   monomeres 3-Isocyanatomethyl-3,5,5-trimethylcyclohexyl-
   isocyanat und/oder dessen Oligomere, bestehend aus
   2 - 5 Monomeren, eingesetzt werden.

| Kategorie | Kennzeichnung des Dokuments mit Angabe, soweit erforderlich, der maßgeblichen Teile | betrifft Anspruch | KLASSIFIKATION DER ANMELDUNG (Int CI³) |
|---|---|---|---|
| X | <u>US - A - 3 808 160</u> (W.H.STEINMETZ)<br>* Spalte 1, Zeilen 15-26; Spalte 2,<br>Zeilen 1-49; Spalte 3, Zeilen 1-61;<br>Spalte 4, Zeilen 21-34; Spalte 6,<br>Zeilen 1-7; Formel; Spalte 8,<br>Zeilen 23-50 * | 1-3 | C 08 G 12/06<br>C 08 G 16/43 |
| X | <u>US - A - 3 857 818</u> (G.L.FRIZELLE)<br>* Spalte 6, Patentanspruch 1; Spalte<br>1, Zeilen 34-52; Spalte 5, Beispiel<br>2; Spalte 6, Zeilen 39-41 * | 1-3 | |
| X | <u>FR - A - 2 213 961</u> (NIPPON ESTER)<br>* Seite 33, Patentansprüche 1,4;<br>Seite 7, Zeilen 17-32 * | 1-3 | **RECHERCHIERTE SACHGEBIETE (Int CI³)**<br>C 08 G 16/00<br>C 08 G 16/4<br>C 09 D 3/00<br>C 08 G 16/76 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-10-1978 | VAN PUYMBROECK |

BAD ORIGINAL